# EUROPEAN PATENT SPECIFICATION

(11) **EP 4 552 919 B1**
(45) Date of publication and mention of the grant of the patent: **08.04.2026**
(21) Application number: 23208837.7
(22) Date of filing: 09.11.2023
(51) Int. Cl.: B60N 2/42, B60N 2/427, B60N 2/50, B60N 2/52

(54) **GAS CYLINDER AND THE USE OF SUCH GAS CYLINDER**
GASZYLINDER UND VERWENDUNG EINES SOLCHEN GASZYLINDERS
VÉRIN À GAZ ET UTILISATION D'UN TEL VÉRIN À GAZ

(43) Date of publication of application: 14.05.2025
(73) Proprietor: Autoliv Development AB, 447 83 Vårgårda (SE)
(72) Inventor: Andersson, Mikael, 447 83 Vårgårda (SE); Sandqvist, Mikael, 447 83 Vårgårda (SE)
(74) Representative: AWA Sweden AB

(56) References cited:
- EP-A1- 0 628 732
- DE-A1- 102011 106 516
- US-A- 6 109 691

## Description

### Technical field

The present invention refers to a gas cylinder and the use of such gas cylinder in a vehicle seat in a truck, bus or lorry.

### Technical background

It is well known in the art to use gas cylinders as dampers in different applications and especially in cabs of trucks, lorries and busses. A gas cylinder may by way of example be integrated in an active seat suspension structure to provide comfort to the seated person. A gas cylinder may also, as another example, be arranged in a scissors type mechanism that is often part of a height adjustable seat structure. The gas cylinder allows the seat structure to be set to a desired height position to thereby accommodate for different lengths of the seated person. Documents DE 10 2011 106516 A1, EP 0 628 732 A1 and US 6 109 691 A show examples of gas cylinders from the prior art.

Any such settings to improve comfort in the cab may however have a negative impact to other safety arrangements in the cab. Especially, it has been seen to be of importance in the event of a roll-over type accident to lower the seat to thereby prevent the head of the seated person to contact the crossbeam that extends between the A-pillar and the B-pillar. Although the driver uses a seatbelt, the seatbelt does not fully couple the body in that direction. This is especially the case in the event the seat has been set to a vertically raised position with a shorter vertical distance between the person's head and the crossbeam of the vehicle cab.

There is hence a need to provide an improved safety arrangement for a seat that is intended to be used in a truck, lorry or bus, which arrangement is directed to operate in the event of a roll-over type accident. Especially, there is a need for an arrangement that can set aside the inherent operation of a gas cylinder in a seat structure in the event of a detected emergency, such as in the event of a detected upcoming crash and especially in the event of an up-coming roll-over type accident.

### Summary

It is an object of the present invention to provide a gas cylinder, and especially a gas cylinder to be used in a vehicle safety arrangement.

The gas cylinder should be designed to allow its inherent functionality as a gas cylinder with an axially movable piston and piston rod to be set aside.

Another object is to provide a gas cylinder which is designed so that the piston instantaneously may be set from a first position to a second position by overruling the biasing means of the gas cylinder.

The gas cylinder should be able to communicate with other safety systems of the vehicle.

Yet another object is to provide a safety arrangement that is specifically designed for a seat structure in a vehicle seat in a car, truck, lorry or bus and similar vehicles that uses a scissors-type mechanism.

These and other objects that will be apparent from the following summary and description are achieved by a gas cylinder according to the appended claims.

According to one aspect of the present invention, there is provided a gas cylinder to be used in a vehicle safety arrangement, wherein the gas cylinder comprises a cylinder and a piston, the piston being movably arranged inside the cylinder and dividing the cylinder in a first chamber and a second chamber, the first chamber being configured to contain a pressurized gas volume having a dimensioned maximum pressure P1, wherein
a gas generator is arranged in communication with the second chamber, and
the gas generator upon activation is configured to generate a pressurized gas volume inside the second chamber providing a peak pressure P2 which is dimensioned to override the dimensioned maximum pressure P1 in the first chamber and to cause a rupture of the cylinder or a rupture of a gas inlet arrangement configured to supply gas to the first chamber, thereby allowing the pressurized gas in the first chamber to be released to the ambience.

Accordingly, gas cylinder is provided where an activation of the gas generator will generate a pressurized gas volume in the second chamber which is of such magnitude that the cylinder or the gas inlet arrangement that is connected to the first chamber ruptures. The rupture will cause an immediate release of the gas from the first chamber. Concurrently, the piston will be moved in a direction towards the first chamber, i.e., towards a wall portion of the first chamber opposite the piston. Thereby the piston will cause an immediate and full retraction of the piston and hence a piston rod that typically is connected to the piston.

In the context of the present invention the term *"dimensioned maximum pressure* P1" is to be understood as the maximum internal pressure that the gas cylinder is designed to resist under its normal operation.

In the context of the present invention the term *"peak pressure P2"* is to be understood as the maximum pressure that is generated by the gas generator when deployed. The peak pressure P2 is preferably at least 5 times the dimensioned maximum pressure P1, and more preferred at least 10 times the dimensioned maximum pressure P1, and even more preferred at least 15 times the dimensioned maximum pressure P1.

The skilled person realizes that the volume of the first chamber and the second chamber respectively will change depending on the position of the piston. The minimum operative volume of the first chamber will be the volume as defined between a rear wall of the piston facing away from the second chamber and the inner walls of the cylinder in a position when the piston is in its inner most operative position. The piston rod will in this position be in its fully retracted position. Correspondingly, the maximum operative volume of the first chamber will be the volume as defined between a rear wall of the piston facing away from the second chamber and the inner walls of the cylinder in a position when the piston is in its outer most operative position. The piston rod will in this position be in its fully extracted position.

The gas generator may be arranged in a through-going opening in a wall portion of the cylinder that defines the second chamber. The gas generator may by way of example be arranged in a sealed and threaded engagement with the wall portion of the cylinder. The gas generator may in another example be arranged in a welded or braced engagement with the wall portion of the cylinder. The gas generator may in yet another example be arranged in an adhesive engagement with the wall portion of the cylinder. The gas generator may in yet another embodiment be arranged in a flexible and sealed engagement with the wall portion of the cylinder. This may by way of example be made by using a flexible bushing. No matter how the gas generator is arranged to the cylinder, it should be able to resist the gas pressure that is generated upon activation of the gas generator without breaking loose.

Any wiring connecting the gas generator to an Electronic Control Unit (ECU) of the vehicle may be arranged to a portion of the gas generator that projects away from the gas cylinder.

The gas generator may alternatively be arranged inside the second chamber. Any wiring connecting the gas generator to an Electronic Control Unit (ECU) of the vehicle may be arranged to extend to the exterior of the cylinder via a sealed and gas tight opening in a wall portion of the cylinder.

The gas generator may be arranged in an end portion of the cylinder opposite the piston. By this position, the pressurized gas generated by the gas generator will be directed towards the piston without any U-turns.

The peak pressure P2 may be dimensioned to cause a rupture of a wall portion defining the first chamber of the cylinder.

The wall portion defining the first chamber may comprise a locally arranged indication of fracture.

The indication of fracture can in one embodiment extend in the circumferential direction of the cylinder. The indication of fracture can in another embodiment extend along the longitudinal direction of the cylinder. The indication of fracture is preferably positioned in a wall portion of the cylinder that is arranged behind the piston as seen in a position when the piston is set to its inner most operative position, i.e., in a position where the piston rod is set to its normally fully retracted position.

A wall portion of the cylinder may comprise a rupture disc, and the peak pressure P2 may be dimensioned to cause a release of said rupture disk.

The rupture disc may be arranged in a wall portion of the cylinder defining the first chamber. The rupture disc is preferably positioned in a wall portion of the cylinder that is arranged behind the piston as seen in a position when the piston is set to its inner most operative position, i.e., in a position where the piston rod is set to its normally fully retracted position.

The gas inlet arrangement may comprise a connector and an optional hose, said connector being arranged in fluid connection with the first chamber. The gas inlet arrangement is configured to allow the first chamber of the gas cylinder to be connected to a gas supply. The gas supply may by way of example be formed by a central pressurized gas supply system of a vehicle. Hence, when operating the gas cylinder in its normal use, the first gas chamber is supplied with pressurized gas from the central pressurized gas supply system. This is well known in the art and not further discussed.

The second chamber may contain a biasing member applying a biasing force to the piston. The biasing member may by way of example be a pressure spring which is arranged inside the second chamber of the cylinder to apply a biasing force to the piston in a direction towards the first chamber.

The gas generator may be a pyrotechnic micro gas generator.

According to another aspect, the invention refers to the use of a gas cylinder of the type described above in a vehicle seat. The vehicle seat may be arranged in a car, a truck, a bus or a lorry, The features and advantages of such gas cylinder have been discussed above. These are equally applicable to a vehicle seat using such gas cylinder, and to avoid undue repetition, reference is made to the sections above.

The gas cylinder may be part of a height adjustable seat structure of the vehicle seat.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses, highly schematically, the overall design of a gas cylinder according to the invention.
Fig. 2 discloses highly schematically one embodiment of a gas cylinder according to the invention in its normal operation upon activation of the gas generator.
Fig. 3 discloses highly schematically one embodiment of a gas cylinder in a condition where the gas generator has been deployed and a wall portion of the first chamber has ruptured.
Fig. 4 discloses highly schematically one embodiment of a gas cylinder in a condition where the gas generator has been deployed and the gas inlet arrangement has ruptured.
Fig. 5 discloses highly schematically one embodiment of a gas cylinder in a condition where the gas generator has been deployed and a rupture disc has been released.
Fig. 6 discloses highly schematically a perspective view of a vehicle seat with a scissors-type leg structure using a gas cylinder according to the invention.

### Detailed description

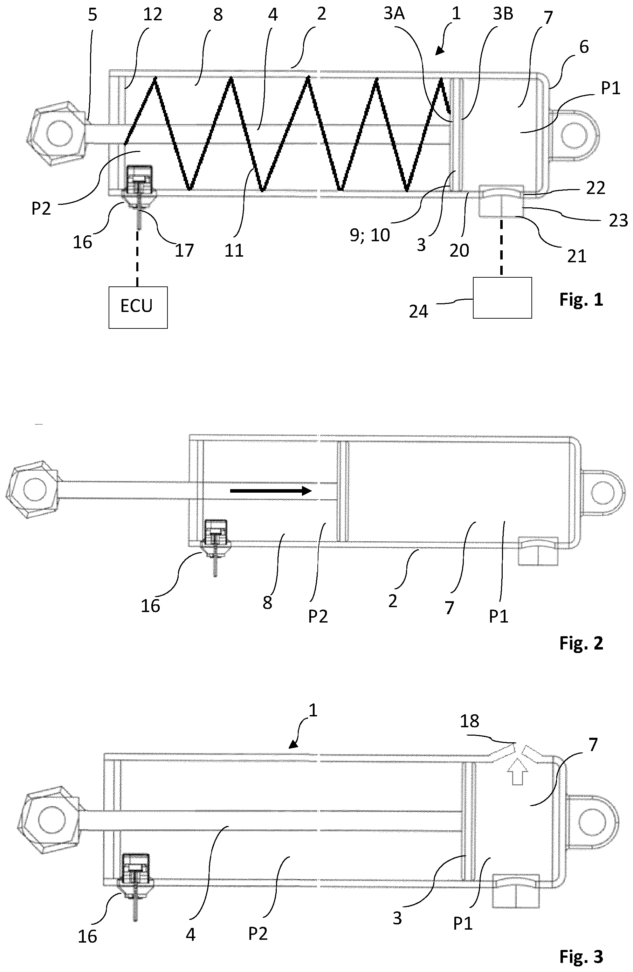

Now turning to Fig. 1, the overall design of a gas cylinder 1 according to the invention is disclosed. The gas cylinder 1 comprises a tubular cylinder 2 having an axial extension. The cylinder 2, which as such is well known in the art, may be formed by a metal material or by a fiber reinforced composite material. The cylinder 2 houses a piston 3 that is movably arranged along the axial extension of the cylinder 2. The piston 3 has a front wall 3A that supports a piston rod 4. The piston rod 4 may be telescopic. The piston rod 4 has a free, front end 5 that projects out of the cylinder 2. Further, the piston 3 has a rear wall 3B that faces a closed, rear end 6 of the cylinder 2. The piston 3 is movably arranged inside the cylinder 2 and divides the cylinder in a first chamber 7 and a second chamber 8. A circumferential wall portion 9 of the piston 3 is provided with a radially projecting sealing 10.

The skilled person realizes that the volume of the first chamber 7 and the second chamber 8 respectively will change depending on the position of the piston 3. The minimum operative volume of the first chamber 7 will be the volume as defined between the rear wall 3B of the piston 3 facing away from the piston rod 4 and the inner walls 9 of the cylinder 2 in a position when the piston 3 is in its inner most operative position. The piston rod 4 will in this position be in its fully retracted position. Correspondingly, the maximum operative volume of the first chamber 7 will be the volume as defined between the rear wall 3B of the piston 3 facing away from the piston rod 4 and the inner wall 20 of the cylinder 2 in a position when the piston 3 is in its outer most operative position. The piston rod 4 will in this position be in its fully extracted position.

The second chamber 8 contains a biasing member 11. The biasing member 11 acts between an inner front wall portion 12 of the cylinder 2 and the front end 3A of the piston 3 and applies a biasing force to the piston 3 in a direction towards the first chamber 7. The biasing member 11 may by way of example be a pressure spring. The skilled person realizes that the same functionality may be achieved by using other types of biasing members.

A wall portion of the cylinder 2 defining the first chamber 7 comprises a gas inlet arrangement 21. The gas inlet arrangement 21 is schematically disclosed as comprising a connector 22 and a hose 23. The connector 22 is arranged in fluid connection with the first chamber 7. The gas inlet arrangement 21 is configured to allow the first chamber 7 of the gas cylinder to be connected to a gas supply 24. The gas supply 24 may by way of example be formed by a central pressurized gas supply system of a vehicle. Hence, when operating the gas cylinder 1 in its normal use, the first chamber 7 is supplied with pressurized gas from the central pressurized gas supply system 24. This is well known in the art and is not further discussed.

The first gas chamber 7 is during operation configured to contain a pressurized gas volume having a dimensioned maximum pressure P1. In the context of the present invention the term *"dimensioned maximum pressure P1"* is to be understood as the maximum internal pressure that the gas cylinder is designed to resist under its normal operation.

A wall portion of the cylinder 2 defining the second chamber 8 supports a gas generator 16. The gas generator 16 is arranged in communication with the second chamber 8. The gas generator 16 is disclosed as having one end extending into the second chamber 8 and one end extending out from and away from the cylinder 2. The end of the gas generator 16 extending out from the cylinder 2 comprises a connector interface 17 that is configured to be connected to an Electronic Control Unit (ECU) of the vehicle. The connection to the ECU may be a wired connection or a wireless connection. The gas generator 16 may be a pyrotechnic micro gas generator.

The gas generator 16 may be arranged in a through-going opening in a wall portion of the cylinder 2 that defines the second chamber 8. The gas generator 16 may by way of example be arranged in a sealed and threaded engagement with the wall portion of the cylinder 2. The gas generator 16 may in another example be arranged in a welded or brazed engagement with the wall portion of the cylinder 2. The gas generator 16 may in yet another example be arranged in an adhesive engagement with the wall portion of the cylinder 2. The gas generator 16 may in yet another embodiment be arranged in flexible and sealed engagement with the wall portion of the cylinder 2. This may by way of example be made by using a flexible bushing.

The gas generator 16 is disclosed as being arranged in an end portion of the cylinder 2 opposite the piston 3. By this position, the pressurized gas generated by the gas generator 16 will be directed in a direction towards the piston 3 without any U-turns.

Now turning to Fig. 2. The biasing member has been omitted to facilitate the illustration. The gas generator 16 is upon activation configured to generate a pressurized gas volume inside the second chamber 8 which provides a peak pressure P2 which is dimensioned to override the dimensioned maximum pressure P1 in the first chamber 7. This will cause a movement of the piston 3, see arrow, thereby compressing the gas in the first chamber 7. In the context of the present invention the term *"peak pressure P2"* is to be understood as the maximum pressure that is generated by the gas generator when deployed. The peak pressure P2 is preferably at least 5 times the dimensioned maximum pressure P1, and more preferred at least 10 times the dimensioned maximum pressure P1, and even more preferred at least 15 times the dimensioned maximum pressure P1.

The peak pressure P2 is configured to cause a rupture of the cylinder 2 or a rupture of the gas inlet arrangement 21 that is configured to supply gas to the first chamber 7. As a result of the rupture, pressurized gas in the first chamber 7 will be released to the ambience. The rupture will be further discussed below.

Now turning to Fig. 3 which discloses one embodiment of a gas cylinder 1 in a condition where the gas generator 16 has been deployed and a wall portion of the first chamber 7 has ruptured. The biasing member has been omitted to facilitate the illustration. To facilitate the rupture and to provide a controlled rupture, a locally arranged indication of fracture 18 is arranged in the wall portion that defines the first chamber 7. The indication of fracture 18 can by way of example have an extension in the circumferential direction of the cylinder 2. As a non-limiting alternative, the indication of fracture 18 can extend along the longitudinal direction of the cylinder 2. No matter extension, it is preferred that the indication of fracture 18 is positioned in a wall portion of the cylinder 2 that is arranged behind the piston 3 as seen in a position when the piston 3 is set to its inner most operative position, i.e., in a position where the piston rod 4 is set to its normally fully retracted position. The peak pressure P2 is dimensioned to cause a rupture of said indication of fracture 18. As a result of the rupture, pressurized gas in the first chamber 7 will be released to the ambience, see arrow.

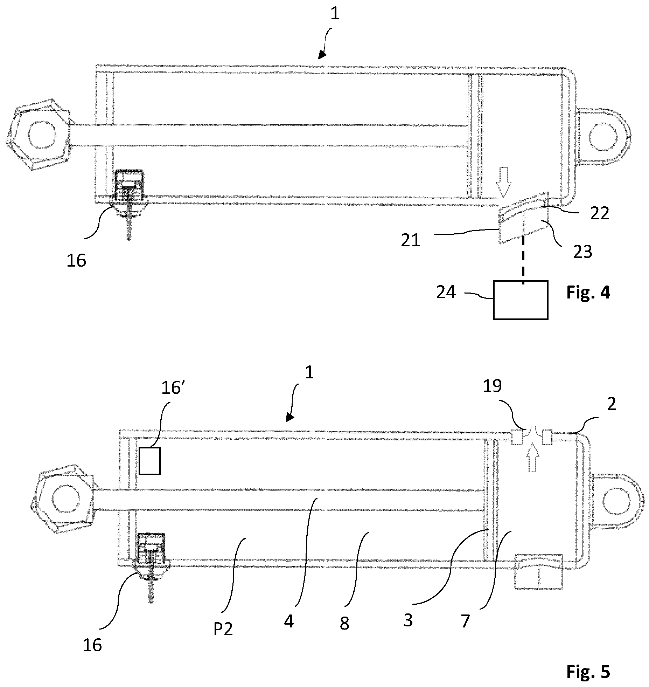

Now turning to Fig. 4, one embodiment of a gas cylinder 1 is disclosed in a condition where the gas generator 16 has been deployed and the gas inlet arrangement 21 has ruptured. The biasing member has been omitted to facilitate the illustration. The rupture may occur e.g., by the connector 22 between the gas cylinder 1 and the gas inlet arrangement 21 releasing or rupturing. Alternatively, the rupture may occur in a hose 23 that connects the connector 22 to the gas supply system 24.

Now turning to Fig. 5, one embodiment of a gas cylinder 1 is disclosed in a condition where a rupture disc 19 is released. The biasing member has been omitted to facilitate the illustration. The rupture disc 19 is arranged in a wall portion of the cylinder 2. The wall portion is preferably a wall portion of the cylinder 2 that together with the piston 3 defines the first chamber 7. The peak pressure P2 of the gas generator 16 is dimensioned to cause a release of the rupture disc 19. The rupture disc 19 is configured to release when the pressure of the pressurized gas in the first chamber 7 exceeds a preset threshold value. The rupture disc 19 is preferably positioned in a wall portion of the cylinder 2 that is arranged behind the piston 3 as seen in a position when the piston 3 is set to its inner most operative position, i.e., in a position where the piston rod 4 is set to its normally fully retracted position.

No matter if the rupture is formed in the cylinder 2, a rupture disc 19 or in the gas inlet arrangement 21, an activation of the gas generator 16 will generate a pressurized gas volume in the second chamber 8 which is of such magnitude that a rupture occurs in or adjacent the first chamber 7. This is achieved by the piston 3 compressing the gas in the first chamber 7. The rupture will cause an immediate release of the gas from the first chamber 7. Concurrently, the piston 3 will be moved towards a wall portion of the first chamber 7 opposite the piston 3. Thereby the piston 3 will cause an immediate and full retraction of the piston rod.

The gas generator 16 has been exemplified as being arranged in a wall portion defining the second chamber 8. The skilled person realizes that the gas generator 16' alternatively may be arranged inside the second chamber, see Fig. 5. Any wiring connecting the gas generator to an Electronic Control Unit (ECU) of the vehicle may be arranged to extend to the exterior of the cylinder via a sealed and gas tight opening in a wall portion of the cylinder.

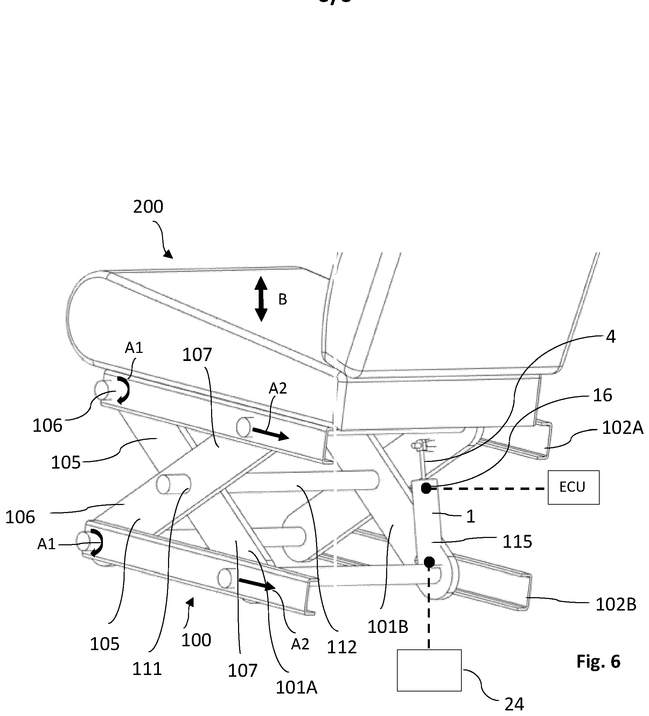

Now turning to Fig. 6 which highly schematically discloses one example of a vehicle seat 200 with a scissors-type leg structure using a gas cylinder 1 according to the invention. This type of vehicle seats 200 are typically used in a truck, lorry or bus. They can also be used in cars. The vehicle seat 200 comprises a height-adjustable seat structure 100 using a scissors-type mechanism. The disclosed seat structure 100 comprises a first set of legs 101A and a second set of legs 101B that are pivotably interconnected by a crossbar 112. Further, the disclosed seat structure 100 comprises an upper pair of guide rails 102A and a lower pair of guide rails 102B.

The legs 105 in the first and second set of legs 101A, 101B comprise one end portion 106 that is pivotably hinged, see arrow A1, to an upper and a lower guide rail 102A, 102B. The other end portions 107 of the first and second sets of legs 101A, 101B are linearly movable, see arrow A2, along the upper and lower guide rails 102A, 102B. The legs 105 operate like a scissors-type mechanism that allows the height of the seat structure 100 to be adjustable, see arrow B, by each leg pivoting in view of its respective guide rail and also by the legs 105 pivoting in view of each other around a pivot 111 that is formed by the cross bar 112.

The seat structure 100 further comprises a highly schematically disclosed seat lifting arrangement 115. The seat lifting arrangement 115, which as such is well known in the art, is typically part of a comfort arrangement of the seat structure 100 to allow the height of the seat structure 100 to be adjusted. The seat lifting arrangement 115 is disclosed as a gas cylinder 1. The gas cylinder 1 is of the same type as has been discussed above.

The free end of the piston rod 4 is mounted to an upper portion of one of the legs. Furter, the opposite end of the gas cylinder 1 is mounted to a lower portion of a leg in the same pair of legs. Although only one gas cylinder is disclosed, the skilled person realizes that two or more gas cylinders may be arranged in the seat structure.

The gas cylinder 1 is connected to a gas supply system 24 of the vehicle. By supplying gas to the gas cylinder 1, the piston rod 4 will be forced towards an extracted position whereby the seat structure 100 will be raised. By instead withdrawing gas from the gas cylinder 1, the seat structure 100 will be lowered by the piston rod 4 retracting.

The gas cylinder 1 differs from prior art in that the second chamber of the gas cylinder 1 comprises a gas generator 16 which in turn is communicating with the Electronic Control Unit (ECU). In the event a processor of the ECU should determine that there is an upcoming emergency where it is beneficial to lower the seat and hence lower the body of the seated passenger, the ECU instructs the gas generator 16 to be activated. The activation may be triggered by an activation signal from one or more crash sensors (not disclosed) that indicates an accident of a roll-over type.

As is discussed above with reference to Figs. 1-5, the activation of the gas generator 16 will generate a pressurized gas volume in the second chamber which is of such magnitude that the first chamber of the cylinder or the gas inlet arrangement that is connected to the first chamber ruptures. The rupture will cause an immediate release of the gas from the first chamber. Concurrently, the piston will be moved into the first chamber, towards a wall portion of the first chamber opposite the piston. Thereby the piston will cause an immediate and full retraction of the piston rod 4. Since the gas cylinder 1 is mounted between two legs 105 in a set of legs 101A, 101B in the scissors-type structure, the piston rod 4 will pull the seat structure to a lowered position. The body of a seated and coupled person will automatically follow in the downward direction since it by means of a seatbelt is coupled to the vehicle seat. Since the person's body is moved downwardly, her head portion will be prevented from hitting a crossbeam structure of the vehicle cab that extends between the A-pillar and the B-pillar. Instead, the sideward movement of her head may be accommodated by an airbag that forms part of the vehicle's overall crash protection system and which airbag is configured to be deployed in the downward and side ward direction.

It is realized by a person skilled in the art that features from various embodiments disclosed herein may be combined with one another to provide further alternative embodiments which belong to the scope defined by the appended claims.

## Claims

1. A gas cylinder to be used in a vehicle safety arrangement, wherein the gas cylinder (1) comprises a cylinder (2) and a piston (3), the piston being movably arranged inside the cylinder and dividing the cylinder in a first chamber (7) and a second chamber (8), the first chamber (7) being configured to contain a pressurized gas volume having a dimensioned maximum pressure P1, wherein
a gas generator (16) is arranged in communication with the second chamber (8), and
the gas generator (16) upon activation is configured to generate a pressurized gas volume inside the second chamber (8) providing a peak pressure P2 which is dimensioned to override the dimensioned maximum pressure P1 in the first chamber (7) and to cause a rupture of the cylinder (2) or a rupture of a gas inlet arrangement (21) configured to supply gas to the first chamber (7), thereby allowing the pressurized gas in the first chamber (7) to be released to the ambience.

2. The gas cylinder according to claim 1, wherein the gas generator (16) is arranged in a through-going opening in a wall portion of the cylinder (2) defining the second chamber (8).

3. The gas cylinder according to claim 1, wherein the gas generator (16) is arranged inside the second chamber (8).

4. The gas cylinder according to any of the preceding claims, wherein the gas generator (16) is arranged in an end portion of the cylinder (2) opposite the piston (3).

5. The gas cylinder according to any of the preceding claims, wherein the peak pressure P2 is dimensioned to cause a rupture of a wall portion defining the first chamber (7) of the cylinder (2).

6. The gas cylinder according to any of the preceding claims, wherein the wall portion defining the first chamber (7) comprises a locally arranged indication of fracture (18).

7. The gas cylinder according to any of claims 1-4, wherein a wall portion of the cylinder (2) comprises a rupture disc (19), and wherein the peak pressure P2 is dimensioned to cause a release of said rupture disc (19).

8. The gas cylinder according to any of the preceding claims, wherein the gas inlet arrangement (21) comprises a connector (22) and an optional hose (23) being arranged in fluid connection with the first chamber.

9. The gas cylinder according to any of the preceding claims, wherein the second chamber (8) contains a biasing member (11) applying a biasing force to the piston (3).

10. The gas cylinder according to any of the preceding claims, wherein the gas generator (16) is a pyrotechnic micro gas generator.

11. Use of a gas cylinder (1) according to any of claims 1-10 in a vehicle seat (200) in a vehicle.

12. The use of a gas cylinder (1) according to claim 11, wherein the gas cylinder (1) is part of a height adjustable seat structure (100) of the vehicle seat (200).

## Patentansprüche

1. Gaszylinder, der in einer Fahrzeugsicherheitsanordnung zu verwenden ist, wobei der Gaszylinder (1) einen Zylinder (2) und einen Kolben (3) umfasst, wobei der Kolben innerhalb des Zylinders bewegbar angeordnet ist und den Zylinder in eine erste Kammer (7) und eine zweite Kammer (8) unterteilt, wobei die erste Kammer (7) konfiguriert ist, um ein Druckgasvolumen, das einen dimensionierten Maximaldruck P1 aufweist, zu erhalten, wobei
ein Gasgenerator (16) in einer Kommunikation mit der zweiten Kammer (8) angeordnet ist und
der Gasgenerator (16) bei einer Aktivierung konfiguriert ist, um ein Druckgasvolumen innerhalb der zweiten Kammer (8) zu erzeugen, wobei ein Spitzendruck P2 bereitgestellt ist, der dimensioniert ist, um den dimensionierten Maximaldruck P1 in der ersten Kammer (7) zu übersteuern und einen Bruch des Zylinders (2) oder einen Bruch einer Gaszufuhranordnung (21) zu verursachen, die konfiguriert ist, um der ersten Kammer (7) ein Gas zuzuführen, wobei dadurch dem Druckgasvolumen in der ersten Kammer (7) ermöglicht wird, an die Umgebung freigesetzt zu werden.

2. Gaszylinder nach Anspruch 1, wobei der Gasgenerator (16) in einer durchgehenden Öffnung in einem Wandabschnitt des Zylinders (2) angeordnet ist, der die zweite Kammer (8) definiert.

3. Gaszylinder nach Anspruch 1, wobei der Gasgenerator (16) innerhalb der zweiten Kammer (8) angeordnet ist.

4. Gaszylinder nach einem der vorstehenden Ansprüche, wobei der Gasgenerator (16) in einem Endabschnitt des Zylinders (2) gegenüber dem Kolben (3) angeordnet ist.

5. Gaszylinder nach einem der vorstehenden Ansprüche, wobei der Spitzendruck P2 dimensioniert ist, um einen Bruch eines Wandabschnitts, der die erste Kammer (7) des Zylinders (2) definiert, zu verursachen.

6. Gaszylinder nach einem der vorstehenden Ansprüche, wobei der Wandabschnitt, der die erste Kammer (7) definiert, ein örtlich angeordnetes Anzeichen einer Bruchstelle (18) umfasst.

7. Gaszylinder nach einem der Ansprüche 1 bis 4, wobei ein Wandabschnitt des Zylinders (2) eine Bruchscheibe (19) umfasst und wobei der Spitzendruck P2 dimensioniert ist, um eine Freisetzung der Bruchscheibe (19) zu verursachen.

8. Gaszylinder nach einem der vorstehenden Ansprüche, wobei die Gaszufuhranordnung (21) einen Verbinder (22) und einen optionalen Schlauch (23) umfasst, die in einer Fluidverbindung mit der ersten Kammer angeordnet sind.

9. Gaszylinder nach einem der vorstehenden Ansprüche, wobei die zweite Kammer (8) ein Vorspannelement (11) enthält, das eine Vorspannkraft auf den Kolben (3) aufbringt.

10. Gaszylinder nach einem der vorstehenden Ansprüche, wobei der Gasgenerator (16) ein pyrotechnischer Mikrogasgenerator ist.

11. Verwendung eines Gaszylinders (1) nach einem der Ansprüche 1 bis 10 in einem Fahrzeugsitz (200) in einem Fahrzeug.

12. Verwendung eines Gaszylinders (1) nach Anspruch 11, wobei der Gaszylinder (1) ein Teil einer höhenverstellbaren Sitzstruktur (100) des Fahrzeugsitzes (200) ist.

## Revendications

1. Cylindre de gaz à utiliser dans un agencement de sécurité de véhicule, dans lequel le cylindre de gaz (1) comprend un cylindre (2) et un piston (3), le piston étant agencé de manière mobile à l'intérieur du cylindre et divisant le cylindre en une première chambre (7) et une seconde chambre (8), la première chambre (7) étant conçue pour contenir un volume de gaz sous pression ayant une pression maximale dimensionnée P1, dans lequel
un générateur de gaz (16) est agencé en communication avec la seconde chambre (8), et
le générateur de gaz (16), lors de son activation, est configuré pour générer un volume de gaz sous pression à l'intérieur de la seconde chambre (8) fournissant une pression de pic P2 qui est dimensionnée pour remplacer la pression maximale dimensionnée P1 dans la première chambre (7) et pour provoquer une rupture du cylindre (2) ou une rupture d'un agencement d'entrée de gaz (21) conçu pour fournir du gaz à la première chambre (7), permettant ainsi au gaz sous pression dans la première chambre (7) d'être libéré dans l'atmosphère.

2. Cylindre de gaz selon la revendication 1, dans lequel le générateur de gaz (16) est agencé dans une ouverture traversante dans une partie paroi du cylindre (2) définissant la seconde chambre (8).

3. Cylindre de gaz selon la revendication 1, dans lequel le générateur de gaz (16) est agencé à l'intérieur de la seconde chambre (8).

4. Cylindre de gaz selon l'une quelconque des revendications précédentes, dans lequel le générateur de gaz (16) est agencé dans une partie d'extrémité du cylindre (2) opposée au piston (3).

5. Cylindre de gaz selon l'une quelconque des revendications précédentes, dans lequel le pic de pression P2 est dimensionné pour provoquer une rupture d'une partie paroi définissant la première chambre (7) du cylindre (2).

6. Cylindre de gaz selon l'une quelconque des revendications précédentes, dans lequel la partie paroi définissant la première chambre (7) comprend une indication de fracture (18) agencée localement.

7. Cylindre de gaz selon l'une quelconque des revendications 1 à 4, dans lequel une partie paroi du cylindre (2) comprend un disque de rupture (19), et dans lequel la pression de pic P2 est dimensionnée pour provoquer une libération dudit disque de rupture (19).

8. Cylindre de gaz selon l'une quelconque des revendications précédentes, dans lequel l'agencement d'entrée de gaz (21) comprend un raccord (22) et un tuyau facultatif (23) étant agencé en raccordement fluidique avec la première chambre.

9. Cylindre de gaz selon l'une quelconque des revendications précédentes, dans lequel la seconde chambre (8) contient un élément de sollicitation (11) appliquant une force de sollicitation au piston (3).

10. Cylindre de gaz selon l'une quelconque des revendications précédentes, dans lequel le générateur de gaz (16) est un microgénérateur de gaz pyrotechnique.

11. Utilisation d'un cylindre de gaz (1) selon l'une quelconque des revendications 1 à 10 dans un siège de véhicule (200) dans un véhicule.

12. Utilisation d'un cylindre de gaz (1) selon la revendication 11, dans lequel le cylindre de gaz (1) fait partie d'une structure de siège (100) ajustable en hauteur du siège de véhicule (200).
